# EUROPÄISCHE PATENTANMELDUNG

(11) **EP 2 317 284 A2**
(43) Veröffentlichungstag der Anmeldung: **04.05.2011**
(21) Anmeldenummer: 10009368.1
(22) Anmeldetag: 09.09.2010
(51) Int. Cl.: G01D 4/02

(54) **Klemmenblock für Elektrizitätszähler, Elektrizitätszähler sowie Verfahren zum übertragen von Elektrizitätzählerdaten**

(30) Priorität: 25.05.2010 DE 102010021447; 17.06.2010 DE 102010024131; 14.10.2009 DE 202009013942 U; 16.10.2009 DE 202009014121 U; 19.10.2009 DE 202009014158 U; 14.04.2010 DE 202010005007 U; 24.09.2009 DE 202009012934 U; 15.12.2009 DE 202009016558 U
(71) Anmelder: ITF Fröschl GmbH, 93194 Walderbach (DE)
(72) Erfinder: Fröschl, Wilfried, 93194 Walderbach (DE)
(74) Vertreter: Graf Glück Habersack Kritzenberger

(57) **Zusammenfassung**

Die Erfindung bezieht sich auf einen Klemmenblock zur Verwendung bei Elektrizitätszählern mit einem Klemmenblockgehäuse (3) zur Aufnahme von elektrischen Funktionselementen, insbesondere zur Aufnahme von Anschlussklemmen zum Anschließen des jeweiligen Elektrizitätszählers, sowie mit wenigstens einem Zusatzgerät (7) am Klemmenblockgehäuse (3) und/oder an einem Element (9) dieses Gehäuses (3).

## Beschreibung

Die Erfindung bezieht sich auf einen Klemmenblock gemäß Oberbegriff Patentanspruch 1 oder 8, auf einen Elektrizitätszähler gemäß Oberbegriff Patentanspruch 10 oder 11 sowie ein sowie Verfahren zum Übertragen von Elektrizitätszählerdaten gemäß Oberbegriff Patentanspruch 12.

Elektrizitätszähler sind in verschiedenen Ausführungen bekannt. Zum Anschluss an das Versorgungsnetz sowie auch zum Anschluss an ein internes Netz des jeweiligen Nutzers bzw. Stromkunden weisen die Elektrizitätszähler grundsätzlich wenigstens einen Klemmenblock auf, in dessen Innenraum u.a. die zum Anschließen des Elektrizitätszählers dienenden Funktionselemente (Klemmen) untergebracht sind und der durch wenigstens einen Deckel gegen unbefugten Zugang gesichert, beispielsweise plombiert, verschlossen ist.

Bekannt ist auch die Verwendung von Zusatzgeräten für Elektrizitätszähler, beispielsweise in Form von Tarifsteuergeräten, Kommunikationsgeräten und/oder Abschalteinrichtungen. Diese Zusatzgeräte werden in der den Elektrizitätszähler aufweisenden Anlage beispielsweise an Tragschienen befestigt, die in der Regel als Hutschienen ausgeführt sind, d.h. als Schienen mit einem Profil, welches an der Profiloberseite, auf die das jeweilige Zusatzgerät aufgesetzt wird, an den beiden Profillängsseiten mit Hinterschnitten ausgeführt ist, die von dem jeweiligen, an der Trag- oder Hutschiene befestigten Zusatzgerät formschlüssig hintergriffen werden.

Des Weiteren sind Elektrizitätszähler bekannt, die über ein Zusatzgerät in Form eines Kommunikationsgerätes verfügen. Über eine Schnittstelle dieses Kommunikationsgerätes ist der Elektrizitätszähler mittels einer Kommunikationsverbindung mit einem Rechner eines Energieversorgers oder eines Energielieferanten verbunden, um Verbrauchsdaten unter Vermeidung eines Ablesevorgangs direkt an den Energieversorger oder Energielieferanten zu verschicken.

Aufgabe der Neuerung ist, Maßnahmen aufzuzeigen, mit denen der Einbau und/oder die Montage von Zusatzgeräten in elektrischen Anlagen wesentlich vereinfacht werden können. Des Weiteren ist es eine weitere Aufgabe der Erfindung, ein Verfahren anzugeben, bei dem eine vom Verbraucher kontrollierte, manipulationsgeschützte Übertragung der Daten vom Elektrizitätszähler zum Energieversorger oder Energielieferanten ermöglicht wird. Zur Lösung dieser Aufgaben ist ein Klemmenblock entsprechend dem Patentanspruch 1 oder 8 und ein Elektrizitätszähler entsprechend dem Patentanspruch 10 oder 11 ausgebildet. Ein Verfahren zum Übertragen von Elektrizitätszählerdaten ist Gegenstand des Patentanspruchs 12.

Der erfindungsgemäße Klemmenblock gestattet eine unmittelbare Anbringung und/oder Montage des jeweiligen Zusatzgerätes am Klemmenblockgehäuse und/oder an einem Element, z.B. Deckel des Klemmenblockgehäuses oder das Klemmenblockgehäuse und/oder das Element des Klemmenblockgehäuses sind Teil des Zusatzgerätes.

Bei der Erfindung ist das Zusatzgerät vorzugsweise ein Kommunikationsgerät, in welchem vorzugsweise ein Webserver enthalten ist, der u.a. die Möglichkeit für den jeweiligen Kunden liefert, seine Daten mit Hilfe eines Webbrowsers eines angeschlossenen Anzeigegeräts beispielsweise in Form eines Rechners, eines Mobiltelefons oder eines PDAs (Personal Digital Assistent) zu sichten. Hierbei können beispielsweise zur Anzeige gebracht werden: Zählerstände gegliedert nach Bezug und/oder Lieferung und/oder Bezug- und/oder Lieferdatum und/oder Bezug- und/oder Liefermenge, nach den jeweils zugehörigen Tarifen, nach der Zählernummer sowie nach den Kundendaten (Anschrift, Kundennummer) usw.

Neu hierbei ist auch die eigenständige Datenübertragung durch den Kunden oder durch den diesem zugeordneten Zähler. So besteht für den Kunden die Möglichkeit, die Zählerstände mit den vorgenannten Daten (Bezug und/oder Lieferung und/oder Bezug- und/oder Lieferdatum und/oder Bezug- und/oder Liefermenge, nach den jeweils zugehörigen Tarifen, nach der Zählernummer sowie nach den Kundendaten, wie Anschrift, Kundennummer usw.) über seinen Rechner per Email an den Energieversorger bzw. -Lieferanten direkt zu übertragen, wobei die Email bevorzugt automatisch generiert wird, z.B. von einem speziellen Benutzerprogramm und nach Eingabe der Daten in eine Maske. Zur Vermeidung von Manipulationen bzw. zur Erkennung von Manipulationen wird eine Prüfsumme oder eine Signatur gebildet, wobei die Prüfsumme bzw. Signatur als Textinformation sichtbar der Email beigefügt wird.

Es besteht aber auch die Möglichkeit, dass die über den Webbrowser gesichteten Daten des Zählers über eine dem Kommunikationsgerät zugeordnete Kommunikationsverbindung des Energieversorgers bzw. -Lieferanten übertragen werden. Diese Übertragung erfolgt nicht automatisiert sondern auf die Eingabe des Verbrauchers bzw. Benutzers hin, um eine höhere Datensicherheit zu gewährleisten und dem Benutzer gleichzeitig über die Versendung der Daten in Kenntnis zu setzen. In beiden Anwendungsfällen kann eine eventuelle Manipulation durch das Bilden der Prüfsumme oder Signatur erkannt werden. Die Prüfsumme bzw. Signatur werden in ein hierfür vorgesehenes Feld des Web-Portals eingetragen. Beim Auslösen einer manuellen Datenübertragung durch den Kunden wird diese Datenübertragung im Kommunikationsgerät protokolliert und gespeichert. Das Protokoll kann auf der Web-Oberfläche des Kommunikationsgeräts von jedem Berechtigten vor Ort, d.h. am Zähler für Überprüfungszwecke eingesehen werden.

Bei der Erfindung ist das Klemmenblockgehäuse beispielsweise mit Befestigungsabschnitten zur Befestigung wenigstens eines Zusatzgerätes ausgebildet, und zwar in der Form, dass das auf dem Gehäuse befestigte Zusatzgerät in dem von ihm eingenommenen Teilbereich das Klemmenblockgehäuse verschließt, d.h. das Zusatzgerät zugleich Deckelelement zum Verschließen des Klemmenblockgehäuses ist, wobei der von dem wenigstens einen Zusatzgerät nicht eingenommene Teil des Klemmenblockgehäuses durch wenigstens ein auf dieses Gehäuse aufgesetztes Deckelelement verschlossen wird.

Bei einer Ausführungsform ist beispielsweise ein den Klemmenblock verschließendes Deckelelement, beispielsweise ein haubenartiges Deckelelement so ausgeführt, dass an diesem Deckelelement des Klemmenblocks das wenigstens eine Zusatzgerät unmittelbar montiert werden kann.

Unter "Zähler", insbesondere "Elektrizitätszähler" ist im Sinne der vorliegenden Erfindung generell jede Messeinrichtung zur Erfassung der an einem Abnehmer oder Verbraucher gelieferten elektrischen Energie zu verstehen.

In Weiterbildung der Erfindung sind der Klemmenblock und/oder das Klemmenblockgehäuse und/oder der Klemmenblockdeckel beispielsweise so ausgeführt,
dass das wenigstens eine Zusatzgerät ein Kommunikationsgerät ist, und/oder
dass im Kommunikationsgerät ein Webserver vorgesehen ist, wobei der Webserver beispielsweise auf JavaScript basiert,
und/oder
dass das Kommunikationsgerät eine Schnittstelle für eine Kommunikationsverbindung oder ein Netzwerk aufweist,
und/oder
dass das Element des Klemmenblockgehäuses ein Deckel des Klemmenblockgehäuses ist, und/oder am Klemmenblockgehäuse und/oder am Element des Klemmenblockgehäuses Mittel, z.B. Befestigungsabschnitte zum Befestigen des wenigstens einen Zusatzgerätes oder eines weitern Zusatzgerätes, beispielsweise dem Profil einer Trag- oder Hubschiene entsprechend geformte Befestigungsabschnitte vorgesehen sind, an denen das wenigstens eine Zusatzgerät oder weitere Zusatzgerät befestigbar ist,
und/oder
dass das Klemmenblockgehäuse für eine Montage des wenigstens einen Zusatzgerätes an einer offenen Seite des Klemmenblockgehäuses in der Weise ausgebildet ist, dass die offene Seite durch das Zusatzgerät zumindest teilweise verschlossen wird bzw. das Zusatzgerät einen Klemmenblockgehäuse-Deckel bildet,
und/oder
dass das Klemmenblockgehäuse an einer offenen Seite für eine wahlweise Befestigung von Zusatzgeräten und/oder Klemmenblockgehäusedeckeln ausgebildet ist, und zwar derart, dass die offene Gehäuseseite durch das wenigstens eine einen Klemmenblockgehäuse-Deckel bildende Zusatzgerät zumindest teilweise verschlossen ist,
und/oder
dass das Klemmenblockgehäuse und/oder das Element des Klemmenblockgehäuses Teil des wenigstens einen Zusatzgerätes oder dessen Gehäuse sind,
und/oder
dass das wenigstens eine Zusatzgerät an der Innenseite des Deckels vorgesehen und/oder in einem nach außen geschlossenen Raum des Deckels untergebracht ist,
und/oder
dass deckelseitige elektrische Kontakte an der Innenseite des Deckels und/oder an dem wenigstens einen Zusatzgerät für eine elektrische Verbindung mit zählerseitigen elektrischen Gegenkontakten vorgesehen sind, und zwar für die elektrische Versorgung des wenigstens einen Zusatzgerätes und/oder zur Übertragung von Daten und/oder Befehlen zwischen dem wenigstens einen Zusatzgerät und dem Elektrizitätszähler,
und/oder
dass die deckelseitigen Kontakte für ein Zusammenwirken mit an dem Klemmenblock des Elektrizitätszählers ausgebildeten Gegenkontakten ausgeführt sind,
und/oder
dass die deckelseitigen Kontakte in einer Anordnung vorgesehen sind, die der Anordnung der zählerseitigen Gegenkontakte entspricht,
und/oder
dass das wenigstens eine Zusatzgerät für Kommunikationsfunktionen und/oder für die Übernahme und/oder Weiterleitung von Zählerdaten und/oder für die Führung einer gesetzlicher Zeit und/oder für die Stempelung der Zählerdaten mit der gesetzlichen Zeit und/oder für eine Datenfernübertragung, insbesondere der Zählerdaten, und/oder zur Bildung und Führung von Lastgängen und/oder zur Führung von Tarifschaltprogrammen ausgebildet ist,
und/oder dass das Zusatzgerät oder Kommunikationsgerät wenigstens eine Speichereinheit mit zumindest zwei Speicherbereichen aufweist, wobei einer der Speicherbereiche ausschließlich durch den Kunden auslesbar ist,
wobei die vorgenannten Merkmale jeweils einzeln oder in beliebiger Kombination vorhanden sein können.

In Weiterbildung der Erfindung ist der Elektrizitätszähler beispielsweise so ausgebildet, dass dessen Klemmenblock und/oder Klemmenblockgehäuse und/oder der Klemmenblockdeckel z.B. so ausgeführt sind,
dass das wenigstens eine Zusatzgerät ein Kommunikationsgerät ist,
und/oder
dass im Kommunikationsgerät ein Webserver vorgesehen ist, wobei der Webserver beispielsweise auf JavaScript basiert,
und/oder
dass das Kommunikationsgerät eine Schnittstelle für eine Kommunikationsverbindung oder ein Netzwerk aufweist,
und/oder
dass das Element des Klemmenblockgehäuses ein Deckel des Klemmenblockgehäuses ist, und/oder
dass am Klemmenblockgehäuse und/oder am Element des Klemmenblockgehäuses Mittel, z.B. Befestigungsabschnitte zum Befestigen des wenigstens einen Zusatzgerätes, beispielsweise dem Profil einer Trag- oder Hubschiene entsprechend geformte Befestigungsabschnitte vorgesehen sind, an denen das wenigstens eine Zusatzgerät befestigbar ist,
und/oder
dass das Klemmenblockgehäuse für eine Montage des wenigstens einen Zusatzgerätes an einer offenen Seite des Klemmenblockgehäuses in der Weise ausgebildet ist, dass die offene Seite durch das Zusatzgerät zumindest teilweise verschlossen wird bzw. das Zusatzgerät einen Klemmenblockgehäuse-Deckel bildet,
und/oder
dass das Klemmenblockgehäuse an einer offenen Seite für eine wahlweise Befestigung von Zusatzgeräten und/oder Klemmenblockgehäusedeckeln ausgebildet ist, und zwar derart, dass die offene Gehäuseseite durch das wenigstens eine einen Klemmenblockgehäuse-Deckel bildende Zusatzgerät zumindest teilweise verschlossen ist,
und/oder
dass das Klemmenblockgehäuse und/oder das Element des Klemmenblockgehäuses Teil des wenigstens einen Zusatzgerätes oder dessen Gehäuse sind,
und/oder
dass das wenigstens eine Zusatzgerät an der Innenseite des Deckels vorgesehen und/oder in einem nach außen geschlossenen Raum des Deckels untergebracht ist,
und/oder
dass deckelseitige elektrische Kontakte an der Innenseite des Deckels und/oder an dem wenigstens einen Zusatzgerät für eine elektrische Verbindung mit zählerseitigen elektrischen Gegenkontakten vorgesehen sind, und zwar für die elektrische Versorgung des wenigstens einen Zusatzgerätes und/oder zur Übertragung von Daten und/oder Befehlen zwischen dem wenigstens einen Zusatzgerät und dem Elektrizitätszähler,
und/oder
dass die deckelseitigen Kontakte für ein Zusammenwirken mit an dem Klemmenblock des Elektrizitätszählers ausgebildeten Gegenkontakten ausgeführt sind,
und/oder
dass die deckelseitigen Kontakte in einer Anordnung vorgesehen sind, die der Anordnung der zählerseitigen Gegenkontakte entspricht,
und/oder
dass das wenigstens eine Zusatzgerät für Kommunikationsfunktionen und/oder für die Übernahme und/oder Weiterleitung von Zählerdaten und/oder für die Führung einer gesetzlicher Zeit und/oder für die Stempelung der Zählerdaten mit der gesetzlichen Zeit und/oder für eine Datenfernübertragung, insbesondere der Zählerdaten, und/oder zur Bildung und Führung von Lastgängen und/oder zur Führung von Tarifschaltprogrammen ausgebildet ist,
und/oder
dass das Zusatzgerät oder Kommunikationsgerät wenigstens eine Speichereinheit mit zumindest zwei Speicherbereichen aufweist, wobei einer der Speicherbereiche
ausschließlich durch den Kunden auslesbar ist,
wobei die vorgenannten Merkmale wiederum jeweils einzeln oder in beliebiger Kombination vorhanden sein können.

In Weiterbildung der Erfindung ist das Verfahren zum Übertragen von Daten eines Elektrizitätszählers an einen Rechner eines Energieversorgers oder Energielieferanten beispielsweise so ausgeführt,
dass an die Daten eine Prüfsumme oder eine Signatur angehängt und/oder die Datenübertragung im Kommunikationsgerät oder -modul protokolliert wird,
und/oder
dass die zu übertragenden Daten und/oder das Datenformat abhängig von einem vom Energieversorgers oder Energielieferanten vorgegebenen Profil über die Kommunikationsverbindung fernkonfiguriert werden, wobei die Fernkonfiguration beispielsweise über JavaScript erfolgt,
und/oder
dass ein Teil der im Zähler oder im Kommunikationsgerät oder -modul abgelegte Zählerdaten, bevorzugt solche Zählerdaten, die nach einem bestehenden Tarifvertrag keine abrechnungsrelevanten Daten sind, nur am Anzeigegerät angezeigt werden,
wobei die vorgenannten Merkmale wiederum jeweils einzeln oder in beliebiger Kombination vorhanden sein können.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an mehreren Ausführungsbeispielen näher erläutert. Es zeigen:

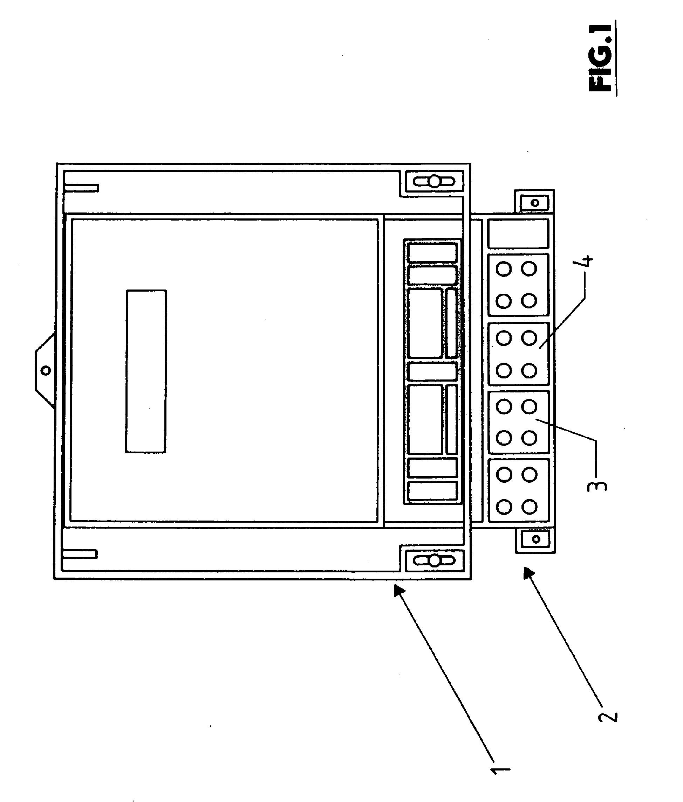

- Fig. 1: in schematischer Darstellung und in Draufsicht einen Elektrizitätszähler mit Klemmenblock und mit dem Klemmenblock befestigten Zusatzgeräten;
- Fig. 2: in perspektivischer Darstellung das Gehäuse des Klemmenblocks, zusammen mit einem Zusatzgerät, bei einer Ausführungsform der Erfindung;
- Fig. 3: eine Darstellung ähnlich Figur 2 bei einer weiteren Ausführungsform der Erfindung;
- Fig. 4: beispielhaft ein Ausschnitt einer dritten Ausführungsform der Erfindung in einer seitlichen Schnittdarstellung;
- Fig. 5: beispielhaft ein Deckel für einen Klemmenblock mit darauf angeordnetem Kommunikationsgerät in einer perspektivischen Darstellung;
- Fig. 6: beispielhaft eine schematische Darstellung eines Elektrizitätszählers mit daran angeschlossenem Anzeigegerät und Rechner eines Energieversorgers.

In den Figuren ist 1 und 2 ein Elektrizitätszähler üblicher Bauart, der über einen am Gehäuse dieses Elektrizitätszählers vorgesehenen Klemmenblock 2 an ein äußeres Versorgungsnetz (beispielsweise 230 V-Versorgungsnetz) sowie auch an das interne Netz eines Stromkunden angeschlossen ist. Der Klemmenblock 2 besteht im Wesentlichen aus einem einstückig mit dem Gehäuse des Elektrizitätszählers 1 hergestellten oder aber mit diesem Gehäuse verbundenen Klemmenblockgehäuse 3, in welchem u.a. die elektrischen Anschlussklemmen untergebracht sind und welches gegen unbefugten Zugang gesichert, beispielsweise durch Verplomben gesichert, verschlossen ist.

Bei der dargestellten Ausführungsform bildet das blockartige Klemmblockgehäuse 3 mehrere in Gehäuselängsrichtung aneinander anschließende Gehäusesegmente, die jeweils einen Innenraum 4 zur Aufnahme von elektrischen Funktionselementen, insbesondere auch zur Aufnahme der Klemmen bilden. Jeder Innenraum 4 ist durch den Klemmengehäuseboden 3.1, die Klemmengehäuselängswände 3.2 und die Klemmengehäusestirnwände 3.3 nach außen verschlossen. Außerdem sind die Innenräume 4 durch Zwischenwände 5 voneinander getrennt, die mit ihren Oberflächenseiten senkrecht zur Gehäuselängsrichtung und auch senkrecht zum Klemmengehäuseboden 3.1 und den Klemmengehäuselängswänden 3.2 orientiert sind.

Bei der dargestellten Ausführungsform sind die Zwischenwände 5 hinsichtlich Form und Größe identisch mit den beiden Klemmengehäusestirnwänden 3.3 ausgeführt, und zwar derart, dass sowohl die Klemmengehäusestirnwände 3.3 als auch die Zwischenwände 5 über die offene Klemmengehäuseoberseite 3.4 vorstehen. An ihrer Oberseite sind die Klemmengehäusestirnwände 3.3 sowie auch die Zwischenwände 5 bei 6 jeweils dem Profil einer Hutschiene entsprechend geformt, sodass zwischen einer Klemmengehäusestirnwand 3.3 und der diesen benachbarten Zwischenwand 5 oder aber zwischen zwei einander benachbarten Zwischenwänden 5 jeweils ein Zusatzgerät 7 befestigt werden kann. Hierfür sind die hutschienenartigen Abschnitte 6 jeweils in einer Ausnehmung 8 des Zusatzgerätes 7 so aufgenommen, dass das Zusatzgerät 7 auf dem Klemmenblockgehäuse 3 formschlüssig und den Innenraum 4 des betreffenden Gehäusesegmentes an der Klemmenblockoberseite 3.4 verschließend befestigt ist. Solche Gehäusesegmente, deren Innenraum 4 nicht durch ein Zusatzgerät 7, beispielsweise in Form eines Tarifsteuergerätes usw. verschlossen ist, werden durch einen auf das Klemmenblockgehäuse 3 aufgesetzten Deckel verschlossen.

Sämtliche an dem Klemmenblockgehäuse 3 befestigten Zusatzgeräte 7 und/oder Deckel sind dann gegen unbefugtes Entfernen gesichert, beispielsweise durch Verplomben.

Die Besonderheit des Elektrizitätszählers 1 besteht also darin, dass auf dem Klemmenblock 2 bzw. auf dem Klemmenblockgehäuse 3 wenigstens ein Zusatzgerät 7 direkt bzw. unmittelbar montiert ist, sodass eine Montage des Zusatzgerätes 7 an einer gesonderten Hut- oder Tragschiene entfällt, womit eine Anlage mit Elektrizitätszähler und Zusatzgeräten wesentlich vereinfacht wird. Das Zusatzgerät 7 bildet eventuell mit weiteren Zusatzgeräten 7 den den Klemmenblock bzw. dessen Gehäuse verschließenden Klemmenblockgehäusedeckel.

Vorstehend wurde davon ausgegangen, dass die Befestigung des wenigstens einen Zusatzgerätes 7 an der Klemmenblockgehäuseoberseite 3.4 erfolgt. Grundsätzlich besteht auch die Möglichkeit einen Deckel des Klemmenblocks 2, beispielsweise einen haubenartigen Deckel des Klemmenblocks 2 so auszubildenden, dass an diesem Deckel eine unmittelbare Montage des wenigstens einen Zusatzgerätes 7 möglich ist.

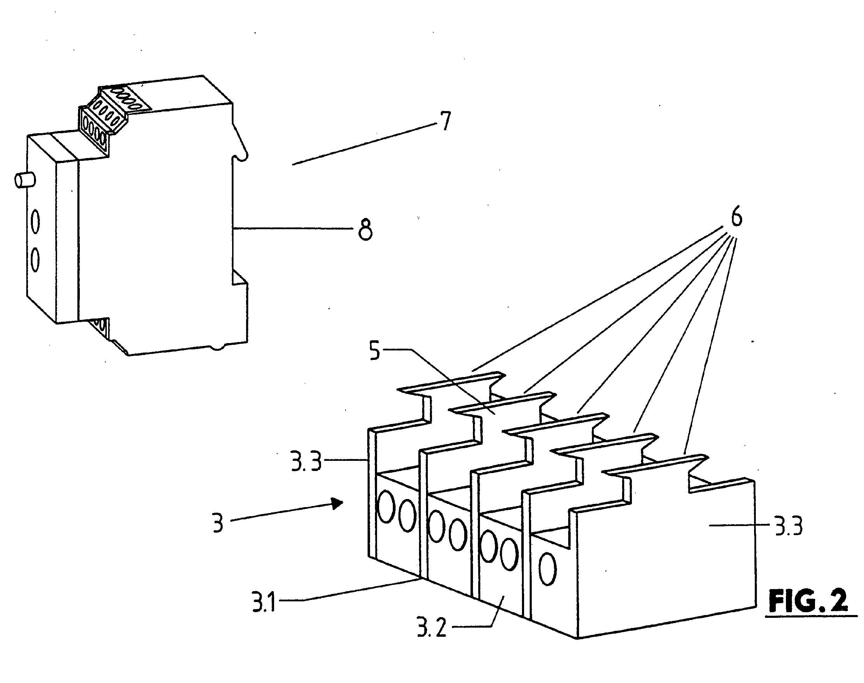

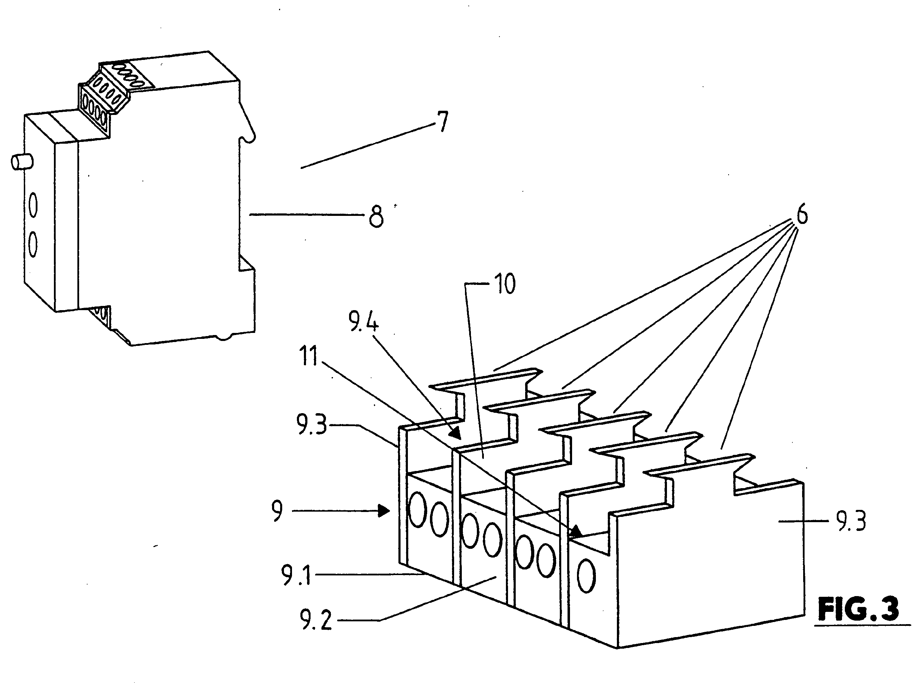

Ein derartiger Deckel 9 ist in der Figur 3 dargestellt. Dieser bei der dargestellten Ausführungsform haubenartige Deckel 9 entspricht in seiner äußeren Formgebung im Wesentlichen der Außenkontur des Klemmenblockgehäuses 3 der Figur 2, allerdings mit dem Unterschied, dass der Deckel 9 an seiner Deckelunterseite 9.1 offen und an den beiden Deckellängsseiten oder -wänden 9.2, an den beiden Deckelstirnseiten oder -wänden 9.3 und an der Deckeloberseite 9.4 geschlossen ist. Die die beiden Deckelstirnseiten 9.3 bildenden Wandabschnitte, die über die Deckeloberseite 9.4 vorstehen. Weiterhin sind Wandabschnitte 10 vorgesehen, die ebenfalls über die Deckeloberseite 9.4 vorstehen. Die Deckelstirnseiten 9.3 und die Wandabschnitte 10 sind jeweils mit einem Abschnitt 6 ausgebildet, sodass an der Deckeloberseite 9.4 zwischen einer Deckelstirnseite 9.3 bzw. dem entsprechenden Wandabschnitt und einem Wandabschnitt 10 sowie zwischen jeweils zwei Wandabschnitten 10 Aufnahmen 11 gebildet sind, in die das jeweilige Zusatzgerät 7 mit einem Teilabschnitt einsetzbar ist und in der dieses Zusatzgerät durch die in die Ausnehmungen 6 formschlüssig eingreifenden Befestigungsabschnitte 6 gehalten ist.

Auch bei dieser Ausführung ist das wenigstens ein Zusatzgerät 7 unmittelbar auf dem Klemmenblock 2 bzw. auf dem Deckel 9 montiert ist, sodass eine Montage des Zusatzgerätes 7 an einer gesonderten Hut- oder Tragschiene entfällt und damit eine Anlage mit Elektrizitätszähler und Zusatzgeräten wesentlich vereinfacht wird.

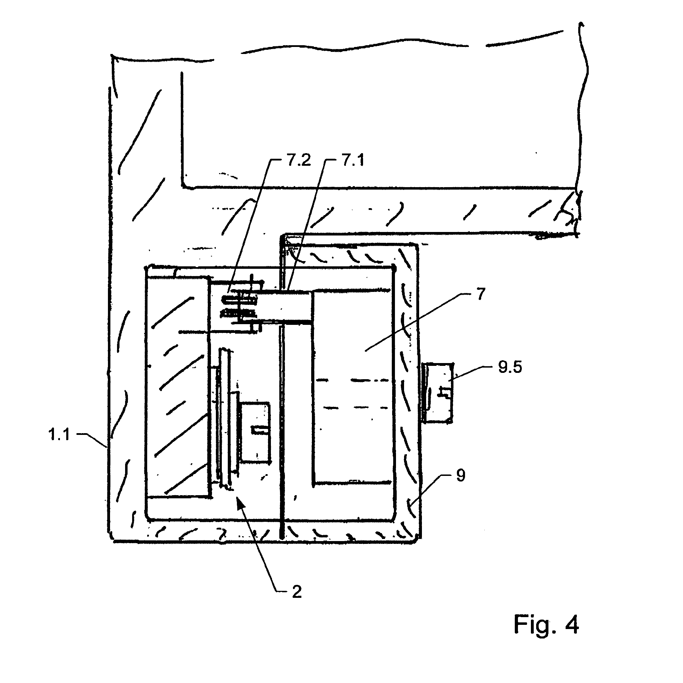

Figur 4 zeigt ein weiteres Ausführungsbeispiel der Erfindung. Der Klemmenblock 2 ist am Gehäuse bzw. an einem Gehäuseabschnitt 1.1 oder -bereich des Elektrizitätszählers 1 außerhalb des eichpflichtigen Raumes vorgesehen, in welchem die eichpflichtigen Zählerkomponenten zugangsgeschützt untergebracht sind, und zwar unter einem Deckel 9 für nicht befugte Personen unzugänglich. Der Klemmenblockdeckel 9 ist hierfür beispielsweise unter Verwendung von zwei plombierten Schrauben 9.5 am Gehäuse bzw. an dem als Klemmblockgehäuse ausgeführten Gehäuseabschnitt 1.1 des Gehäuses befestigt.

Die Besonderheit des Elektrizitätszählers 1 besteht darin, dass der Deckel 9 mit wenigstens einem Zusatzgerät 7 ausgebildet ist, welches in der Figur 4 schematisch als Block dargestellt ist und bei montiertem Deckel 9 unter diesem Deckel 9 zugangsgeschützt, d.h. nur für autorisierte Personen zugänglich untergebracht ist. Das Zusatzgerät 7 ist von einer entsprechenden elektronischen Schaltung oder von einem entsprechenden elektronischen Modul gebildet.

Das Zusatzgerät 7 oder der Deckel 9 sind an der dem Klemmblock 2 zugewandten Seite mit einer Vielzahl von elektrischen Kontakten 7.1 oder Klemmen versehen, über die beim Montieren bzw. Aufsetzen des Deckels 9 auf den Gehäuseabschnitt 1.1 jeweils automatisch eine elektrische Verbindung zu dem Klemmenblock 2 bzw. zu dort vorhandenen elektrischen Gegenkontakten 7.2 hergestellt wird, und zwar für die elektrische Versorgung des Zusatzgerätes 7 sowie auch für die Übertragung von Daten und/oder Befehlen zwischen dem Zähler und dem Zusatzgerät 7.

Das Zusatzgerät 7 ist wiederum für Zusatzfunktionen unterschiedlichster Art ausgebildet, und zwar insbesondere auch für nicht eichpflichtige Zusatzfunktionen, die üblicherweise in einem externen Zusatzgerät untergebracht sind oder sein können. Durch das Zusatzgerät wird die Funktionalität des Elektrizitätszählers 1 praktisch ohne zusätzlichen Montageaufwand und Platzbedarf wesentlich erweitert.

Das Zusatzgerät 7 im Deckel 9 eignet sich u.a. für Zusatzfunktionen, die der Kommunikation mit dem Zähler und/oder der Fernübertragung von Zählerdaten dienen, insbesondere aber auch für folgende Funktionen:
1. Übernahme von Zählerdaten über eine Datenschnittstelle
2. Führung der gesetzlichen Zeit
3. Stempelung der Zählerdaten mit der gesetzlichen Zeit
4. Bildung und Führung von Lastgängen
5. Führung von Tarifschaltprogrammen
6. Kommunikation mit Leitstellen.

Das Zusatzgerät 7 ist z.B. entsprechend dem Standard DIN43857 am Klemmblock 2 des Elektrizitätszählers 1 in der oben beschriebenen Weise mit den beiden plombierten Schrauben 7 befestigt, sodass sich auch das Zusatzgerät 7 nur für Berechtigte zugängig innerhalb des mit dem Deckel 9 abdeckten Raums befindet. Mit der Plombierung wird ferner sichergestellt, dass das Zusatzgerät 7 alle Schutzanforderungen bezüglich Berührung und Kurzschlussgefahr erfüllt, welche an den Elektrizitätszähler 1 gestellt werden.

Der besondere Vorteil der beschriebenen Ausbildung besteht darin, dass der Deckel 9 passend für das Zählergehäuse ausgebildet ist und somit die Möglichkeit besteht, einen am Elektrizitätszähler 1 bereits vorhandenen Deckel 9, der das Zusatzgerät 7 nicht aufweist, durch einen Deckel 4 mit dem Zusatzgerät 7 zu ersetzen und dadurch die Funktionalität des Elektrizitätszählers 1 zu erhöhen, ohne dass ein Austauschen des Elektrizitätszählers 1 notwendig ist.

Unabhängig von der sonstigen Ausbildung des Zählers 1 ist das Zusatzgerät 7 auch bei allen vorbeschriebenen Ausführungsformen bevorzugt hoch integriert ausgeführt, d.h. bestehend aus wenigstens einem die Funktionen des Zusatzgerätes 7 beinhaltenden, integrierten Schaltkreis ggf. mit einem ebenfalls integrierten Schaltkreis zur Bereitstellung der gesetzlichen Zeit und/oder zur Sicherstellung und/oder Konstanthaltung der für den Betrieb des Zusatzgerätes 7 erforderlichen Versorgungsspannung 1. Die Funktionen des Zusatzgerätes 7 sind u.a. nicht eichpflichtige Zusatzfunktionen und/oder die Übernahme von Zählerdaten über eine Datenschnittstelle, die Führung der gesetzlichen Zeit, die Stempelung der Zählerdaten mit der gesetzlichen Zeit, die Bildung und Führung von Lastgängen, die Führung von Tarifschaltprogrammen und/oder die Kommunikation mit Leitstellen.

Vorstehend wurde davon ausgegangen, dass das Zusatzgerät 7 den Klemmenblockdeckel bildet und/oder der Klemmenblockdeckel 9 mit dem Zusatzgerät 7 versehen ist und mit dem Klemmenblockdeckel montiert wird. Grundsätzlich besteht auch die Möglichkeit, das Zusatzgerät 7 als eigenständige Baueinheit am Klemmenblock 2 zu montieren und dann zusammen mit dem Klemmenblock 2 durch den Klemmenblockdeckel 9 abzudecken, so dass Zusatzgerät 7 wiederum hinter dem Klemmenblockdeckel 9 in dem durch diesen verschlossenen Raum angeordnet ist.

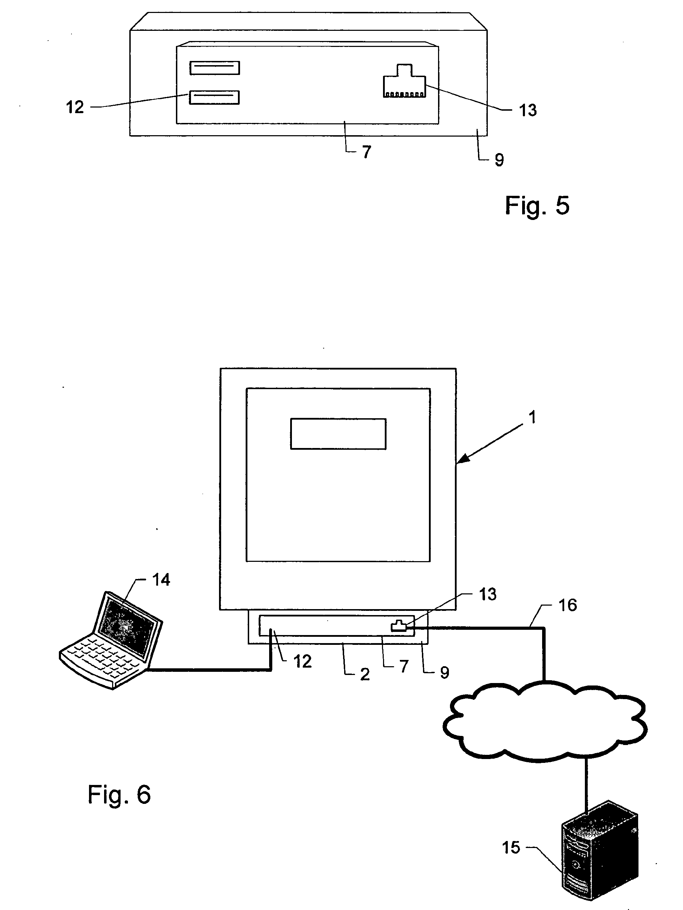

Das in den Figuren 5 und 6 ist nochmals das Zusatzgerät 7 schematisch dargestellt. Das Zusatzgerät 7 ist bevorzugt ein Kommunikationsgerät, das zumindest einen Prozessor zur Abarbeitung von Softwareroutinen und eine Speichereinheit zum Abspeichern von Daten aufweist. Das Kommunikationsgerät ist hierbei zum Empfangen von Daten des Zählwerks des Elektrizitätszählers ausgebildet und speichert diese in der Speichereinheit ab.

In einer bevorzugten Weiterbildung der Erfindung weist die Speichereinheit zumindest zwei Speicherbereiche auf. Diese sind durch aus dem Stand der Technik bekannte Sicherungsmaßnahmen vor unbefugtem Zugriff geschützt, beispielsweise über einen Passwortschutz. Einer dieser Speicherbereiche ist lediglich für Lesezugriffe des Kunden, der weitere für Lesezugriffe des Energieversorgers, des Energielieferanten bzw. von Wartungs- und Ablesepersonal vorgesehen. Durch die Trennung der Speichereinheit in mehrere Speicherbereiche kann beispielsweise erreicht werden, dass die vom Kunden auslesbaren Daten unterschiedlich zu den vom Energieversorger, dem Energielieferanten bzw. von Wartungs- und Ablesepersonal auslesbaren Daten ist. So kann der Kunde beispielsweise Lastgänge über der Zeit oder Lastprofile, insbesondere den gemittelten Stromverbrauch im Tagesverlauf in dem ihm zugewiesenen Speicherbereich einsehen, ein Zugriff des Energieversorgers bzw. des Energielieferanten auf diese Daten ist nicht möglich. Ferner kann ein dritter Speicherbereich vorgesehen sein, der sowohl vom Kunden als auch vom Energieversorger bzw. Energielieferanten eingesehen werden kann. Das Zusatzgerät 7 ist hierfür konfigurierbar, und zwar beispielsweise entsprechend des zwischen dem Energielieferanten und dem Kunden bzw. Energieabnehmer geschlossenen Vertrages.

Vorzugsweise ist auf dem Kommunikationsgerät ein Webserver implementiert, der es dem jeweiligen Kunden ermöglicht, die im Speicher abgelegten Daten mit Hilfe eines Webbrowsers zu sichten. Hierzu weist das Kommunikationsgerät eine erste Schnittstelle 12 beispielsweise als drahtgebundene USB- oder Ethernet-Schnittstelle oder als Funkschnittstelle auf, über die ein Anzeigegerät 14 beispielsweise in Form eines Computers, eines Mobiltelefons oder eines PDAs mit dem Kommunikationsgerät in Verbindung tritt. Die Daten werden vom Webserver dann als vom Webbrowser lesbare Dateien dem Anzeigegerät bereitgestellt und dort zur Anzeige gebracht. Des Weiteren ist eine zweite Schnittstelle 13 vorgesehen, mittels der das Kommunikationsgerät über eine Kommunikationsverbindung 16 mit einem Rechner 15 des Energieversorgers bzw. des Energielieferanten in Verbindung steht. Die Kommunikationsverbindung kann hierbei drahtgebunden beispielsweise über das Internet oder über eine Funkschnittstelle beispielsweise GPRS in einem GSM-Netz oder einem UMTS-Netz ausgebildet sein.

Vorzugsweise basiert der Webserver und /oder der Webbrowser auf der Skriptsprache JavaScript bzw. unterstützt JavaScript. Dadurch wird es möglich, dass der Webbrowser neben dem Sichten der Daten auch Daten verschicken kann, und zwar beispielsweise an den Rechner 15, auf dem das Web-Portal des Energieversorgers bzw. des Energielieferanten bereitgestellt ist. Des Weiteren ist es durch diese Skriptsprache möglich, dass das Kommunikationsgerät über die Kommunikationsverbindung 16 vom jeweiligen Energieversorger bzw. Energielieferanten fernkonfiguriert wird. Hierbei kann dem Kommunikationsgerät mitgeteilt werden, welche Daten und/oder welches Datenformat an das Webportal zu übertragen sind. Dies ist notwendig, weil die Datensätze bzw. das Datenformat nicht standardisiert sind, so dass sich abhängig vom jeweiligen Energielieferanten die zu übertragenden Daten unterscheiden.

Besonders bevorzugt erteilt der Benutzer durch eine Eingabe am Anzeigegerät 14 eine Freigabe an das Kommunikationsgerät zum Übertragen der Daten, wobei das Übertragen der Daten beispielsweise über die Kommunikationsverbindung 16 zwischen dem Kommunikationsgerät und dem Rechner 15 erfolgt. Damit ist zum einen der Benutzer über die versendeten Daten informiert und behält im Vergleich zu einem automatisierten Versand der Daten die Hoheit über die versendeten Daten, zum anderen wird eine höhere Manipulationssicherheit erreicht, da die Daten am Anzeigegerät 14 lediglich zur Anzeige gebracht werden, der Versand aber von der Speichereinheit des Kommunikationsgerätes aus erfolgt, auf die der Benutzer keinen Zugriff hat. Das Übertragen der Daten kann aber auch über das Anzeigegerät 14 und eine Internetverbindung z.B. als E-Mail erfolgen.

Zur weiteren Erhöhung der Datensicherheit wird den Daten eine Prüfsumme oder eine Signatur beigefügt. Diese Signatur wird mit den Daten an den Energieversorger bzw. den Energielieferanten übertragen und dort ausgewertet um eventuelle Manipulationen an den Daten zu erkennen. Ferner wird jede Datenübertragung im Kommunikationsgerät protokolliert und das Protokoll gespeichert. Es kann auf der Web-Oberfläche des Kommunikationsgeräts von jedem Berechtigten vor Ort, d.h. am Zähler für Überprüfungszwecke eingesehen werden.

Bevorzugt ist das wenigstens eine Zusatzgerät 7 bzw. Kommunikationsgerät integraler Bestandteil des Klemmblocks oder Deckels 9, und zwar beispielsweise derart, dass bei der Montage des Klemmenblocks und/oder des Deckels 9 die notwendigen elektrischen Verbindungen zwischen dem Zusatzgerät bzw. Kommunikationsgerät und dem Zähler hergestellt werden.

Die Erfindung wurde voranstehend an einem Ausführungsbeispiel beschrieben. Es versteht sich, dass zahlreiche Änderungen sowie Abwandlungen möglich sind, ohne dass dadurch der der Erfindung zugrunde liegende Erfindungsgedanke verlassen wird.

### Bezugszeichenliste

- 1: Elektrizitätszähler
- 1.1: Gehäuseabschnitt
- 2: Klemmenblock
- 3: Klemmenblockgehäuse
- 3.1: Boden des Klemmenblockgehäuses
- 3.2: Klemmenblockgehäuselängsseite oder - wand
- 3.3: Klemmenblockgehäusestirnseite oder -wand
- 4: Segmentinnenraum
- 5: Zwischenwand
- 6: Befestigungsabschnitt
- 7: Zusatzgerät
- 7.1: Kontakt
- 7.2: Gegenkontakt
- 8: Ausnehmung
- 9: Deckel
- 9.1: Deckelunterseite
- 9.2: Deckel längsseite oder-wand
- 9.3: Deckelstirnseite oder -wand
- 9.4: Deckeloberseite
- 9.5: Schraube
- 10: Wandabschnitt
- 11: Aufnahme
- 12: erste Schnittstelle
- 13: zweite Schnittstelle
- 14: Anzeigegerät
- 15: Rechner
- 16: Kommunikationsverbindung

## Patentansprüche

1. Klemmenblock zur Verwendung bei Elektrizitätszählern mit einem Klemmenblockgehäuse (3) zur Aufnahme von elektrischen Funktionselementen, insbesondere zur Aufnahme von Anschlussklemmen zum Anschließen des jeweiligen Elektrizitätszählers, sowie mit wenigstens einem Zusatzgerät (7) am Klemmenblockgehäuse (3) und/oder an einem Element (9) dieses Gehäuses (3), **dadurch gekennzeichnet,**
**dass** das Klemmenblockgehäuse (3) und/oder das Element (9) des Klemmenblockgehäuses (3) Teil des wenigstens einen Zusatzgerätes (7) oder dessen Gehäuse sind, wobei das wenigstens eine Zusatzgerät (7) bevorzugt ein Kommunikationsgerät ist.

2. Klemmenblock nach Anspruch 1, **dadurch gekennzeichnet, dass** im Kommunikationsgerät ein Webserver vorgesehen ist, wobei der Webserver beispielsweise auf JavaScript basiert, und/oder dass das Kommunikationsgerät eine Schnittstelle für eine Kommunikationsverbindung oder ein Netzwerk aufweist.

3. Klemmenblock nach Anspruch 1 oder 2, **dadurch gekennzeichnet, dass** das Element des Klemmenblockgehäuses (3) ein Deckel (9) des Klemmenblockgehäuses (3) ist.

4. Klemmenblock nach einem der vorhergehenden Ansprüche, **dadurch gekennzeichnet, dass** das Klemmenblockgehäuse (3) für eine Montage des wenigstens einen Zusatzgerätes (7) an einer offenen Seite des Klemmenblockgehäuses (3) in der Weise ausgebildet ist, dass die offene Seite durch das Zusatzgerät (7) zumindest teilweise verschlossen wird bzw. das Zusatzgerät (7) einen Klemmenblockgehäuse-Deckel bildet, und/oder
dass das Klemmenblockgehäuse (3) an einer offenen Seite für eine wahlweise Befestigung von Zusatzgeräten (7) und/oder Klemmenblockgehäusedeckeln ausgebildet ist, und zwar derart, dass die offene Gehäuseseite durch das wenigstens eine einen Klemmenblockgehäuse-Deckel bildende Zusatzgerät (7) zumindest teilweise verschlossen ist.

5. Klemmenblock nach einem der vorhergehenden Ansprüche, **dadurch gekennzeichnet, dass** das wenigstens eine Zusatzgerät (7) an der Innenseite des Deckels (9) vorgesehen und/oder in einem nach außen geschlossenen Raum des Deckels (9) untergebracht ist, wobei beispielsweise deckelseitige elektrische Kontakte (7.1) an der Innenseite des Deckels (9) und/oder an dem wenigstens einen Zusatzgerät (7) für eine elektrische Verbindung mit zählerseitigen elektrischen Gegenkontakten (7.2) vorgesehen sind, und zwar für die elektrische Versorgung des wenigstens einen Zusatzgerätes (7) und/oder zur Übertragung von Daten und/oder Befehlen zwischen dem wenigstens einen Zusatzgerät (7) und dem Elektrizitätszähler (1),
und/oder
wobei beispielsweise die deckelseitigen Kontakte (7.1) für ein Zusammenwirken mit an dem Klemmenblock (2) des Elektrizitätszählers (1) ausgebildeten Gegenkontakten (7.2) ausgeführt und/oder in einer Anordnung vorgesehen sind, die der Anordnung der zählerseitigen Gegenkontakte (7.2) entspricht.

6. Klemmenblock nach einem der vorhergehenden Ansprüche, **dadurch gekennzeichnet, dass** das wenigstens eine Zusatzgerät (7) für Kommunikationsfunktionen und/oder für die Übernahme und/oder Weiterleitung von Zählerdaten und/oder für die Führung einer gesetzlicher Zeit und/oder für die Stempelung der Zählerdaten mit der gesetzlichen Zeit und/oder für eine Datenfernübertragung, insbesondere der Zählerdaten, und/oder zur Bildung und Führung von Lastgängen und/oder zur Führung von Tarifschaltprogrammen ausgebildet ist.

7. Klemmenblock nach einem der vorhergehenden Ansprüche, **dadurch gekennzeichnet, dass** das Zusatzgerät (7) oder Kommunikationsgerät wenigstens eine Speichereinheit mit zumindest zwei Speicherbereichen aufweist, wobei einer der Speicherbereiche ausschließlich durch den Kunden auslesbar ist.

8. Klemmenblock zur Verwendung bei Elektrizitätszählern mit einem Klemmenblockgehäuse (3) zur Aufnahme von elektrischen Funktionselementen, insbesondere zur Aufnahme von Anschlussklemmen zum Anschließen des jeweiligen Elektrizitätszählers,
wobei der Klemmenblock (2) für eine unmittelbare Montage wenigstens eines Zusatzgerätes (7) am Klemmenblockgehäuse (3) und/oder an einem Element (9) dieses Gehäuses (3) ausgebildet oder das wenigstens eine Zusatzgerät (7) am Klemmenblockgehäuse (3) und/oder an dem Element (9) des Klemmenblockgehäuses (3) unmittelbar vorgesehen ist,
**dadurch gekennzeichnet,**
**dass** das wenigstens eine Zusatzgerät (7) ein Kommunikationsgerät ist.

9. Klemmenblock nach einem der vorhergehenden Ansprüche, **dadurch gekennzeichnet, dass** das Klemmenblockgehäuse (3) und/oder das Element (9) des Klemmenblockgehäuses (3) Teil des wenigstens einen Zusatzgerätes (7) oder dessen Gehäuse sind,
und/oder
dass am Klemmenblockgehäuse (3) und/oder am Element (9) des Klemmenblockgehäuses (3) Mittel, z.B. Befestigungsabschnitte zum Befestigen des wenigstens einen Zusatzgerätes (7) oder eines weitern Zusatzgerätes, beispielsweise dem Profil einer Trag- oder Hubschiene entsprechend geformte Befestigungsabschnitte (6) vorgesehen sind, an denen das wenigstens eine Zusatzgerät (7) oder weitere Zusatzgerät befestigbar ist.

10. Elektrizitätszähler mit Klemmenblock (3), **dadurch gekennzeichnet, dass** der Klemmenblock (3) entsprechend einem der vorhergehenden Ansprüche 1 - 9 ausgebildet ist.

11. Elektrizitätszähler, **dadurch gekennzeichnet, dass** der Elektrizitätszähler (1) oder ein mit diesem verbundenes und beispielsweise als Zusatzgerät (7) ausgebildetes Kommunikationsgerät wenigstens eine Speichereinheit mit zumindest zwei Speicherbereichen zur Speicherung von Zählerdaten aufweisen, und dass der Zähler oder das Kommunikationsgerät derart ausgeführt oder konfigurierbar sind, dass einer der Speicherbereiche ausschließlich durch den Kunden auslesbar ist.

12. Verfahren zum Übertragen von Daten eines Elektrizitätszähler (1) an einen Rechner (15) eines Energieversorgers oder Energielieferanten, bei dem ein Kommunikationsgerät oder -modul als Bestandteil des Elektrizitätszählers oder als Zusatzgerät (7) eine erste Schnittstelle (12) für ein Anzeigegerät mit einem Webbrowser zur Benutzerinteraktion aufweist, **dadurch gekennzeichnet, dass** durch einen im Kommunikationsgerät oder - modul vorgesehenen Web-Server wenigstens eine Webseite mit Daten des Elektrizitätszählers (1) bereitgestellt wird, und
dass die Webseite an dem an der ersten Schnittstelle (13) angeschossenen Anzeigegerät (14) angezeigt wird,
wobei bevorzugt veranlasst durch eine Benutzereingabe eine Versendung der Daten über eine Kommunikationsverbindung mit einem Rechner (15) des Energieversorgers oder Energielieferanten erfolgt, beispielsweise über das Anzeigegerät (14) oder über eine mit dem Kommunikationsgerät oder -modul oder eine zweite Schnittstelle (13) des Kommunikationsgerätes oder -moduls verbundene Kommunikationsverbindung.

13. Verfahren nach Anspruch 12, **dadurch gekennzeichnet,**
**dass** an die Daten eine Prüfsumme oder eine Signatur angehängt und/oder die Datenübertragung im Kommunikationsgerät oder -modul protokolliert wird, und/oder
**dass** die zu übertragenden Daten und/oder das Datenformat abhängig von einem vom Energieversorgers oder Energielieferanten vorgegebenen Profil über die Kommunikationsverbindung fernkonfiguriert werden, wobei die Fernkonfiguration beispielsweise über JavaScript erfolgt,
und/oder
**dass** ein Teil der im Zähler oder im Kommunikationsgerät oder -modul abgelegte Zählerdaten, bevorzugt solche Zählerdaten, die nach einem bestehenden Tarifvertrag keine abrechnungsrelevanten Daten sind, nur am Anzeigegerät (14) angezeigt werden.
